# FASCICULE DE BREVET EUROPEEN

(11) **EP 1 527 925 B1**
(45) Date de publication et mention de la délivrance du brevet: **16.06.2010**
(21) Numéro de dépôt: 04364065.5
(22) Date de dépôt: 29.10.2004
(51) Int. Cl.: B60J 7/00

(54) **Dispositif d'occultation d'une surface vitrée d'un véhicule automobile, à deux toiles d'occultation, et véhicule automobile correspondant**
Verdunkelungsvorrichtung für Kraftfahrzeugsglasoberfläche mit zwei Vorhänge und damit ausgerüstetes Fahrzeug
Screening device for vehicle glass panel with two shade curtains and corresponding motor vehicle

(30) Priorité: 03.11.2003 FR 0312896
(43) Date de publication de la demande: 04.05.2005
(73) Titulaire: Advanced Comfort Systems France - ACS France, 79300 Bressuire (FR)
(72) Inventeur: Moreau, Stéphane, 79700 Le Temple (FR); Giret, Frédéric, 79300 Saint Porchaire (FR)
(74) Mandataire: Bioret, Ludovic

(56) Documents cités:
- WO-A-02/42103
- WO-A-02/070854
- DE-A- 10 163 122
- DE-A- 10 206 161
- DE-U- 29 607 209
- US-B1- 6 634 703

## Description

Le domaine de l'invention est celui de l'occultation de surfaces vitrées ou d'ouvertures dans les véhicules automobiles. Plus précisément, l'invention concerne les dispositifs mettant en oeuvre des toiles d'occultation mobiles susceptibles d'être repliées ou déployées en fonction des besoins.

L'invention concerne ainsi notamment l'occultation d'un pavillon vitré d'un véhicule.

De façon assez répandue, les toits des véhicules automobiles sont pourvus d'une baie et/ou d'une ouverture vitrée. Diverses solutions ont été proposées pour limiter le passage des rayons du soleil, notamment en utilisant des stores, des vitres teintées ou un motif filtrant rapporté sur la vitre par exemple par sérigraphie.

La tendance actuelle est de proposer des véhicules automobiles présentant de plus en plus de surfaces vitrées. On cherche ainsi à augmenter la surface vitrée des portières latérales, des pare-brises et des lunettes arrière, et également des pavillons. On propose ainsi des véhicules à pavillon intégralement, ou à tout le moins en grande partie, vitrée.

Les objectifs de cette tendance sont notamment d'offrir :
- une meilleure visibilité pour les occupants du véhicule ;
- une luminosité accrue à l'intérieur du véhicule ;
- une sensation d'espace élargi pour les occupants ;
- une amélioration de l'esthétique générale du véhicule ;
- ...

On comprend aisément qu'il est alors nécessaire de prévoir des moyens d'occultation, pour protéger de tels habitacles, et leurs occupants, du soleil.

De tels moyens d'occultation sont déjà proposés, pour être déployés en regard des pavillons vitrés. Des stores à enrouleur, comprenant classiquement une toile mobile entre une position déployée et une position repliée, de même que ceux utilisés pour les vitres latérales ou les lunettes arrière, ont ainsi été transposés et/ou perfectionnés en vue d'être adaptés aux pavillons vitrés.

Selon cette approche classique, la toile peut être déployée en position d'occultation en étant tirée, à partir du tube d'enroulement, de l'arrière du véhicule vers l'avant.

Dans certains cas, plusieurs positions de déploiement intermédiaire de la toile peuvent être prévues. En effet, il n'est pas toujours nécessaire, ou souhaitable, que la toile soit intégralement déployée. On peut par exemple souhaiter protéger les places arrière, occupées par des enfants, et conserver le soleil sur les places avant.

Toutefois, ces stores ne sont pas d'une grande modularité. En effet, la structure et le fonctionnement de ces stores sont essentiellement prévus pour satisfaire les besoins du conducteur et/ou du passager avant du véhicule. En d'autres termes, ces stores ne peuvent satisfaire des combinaisons de demandes de protection exprimées par le conducteur et/ou le passager avant et par le ou les passagers arrière.

Il n'est par exemple pas possible, dans le cas du montage mentionné précédemment, de protéger spécifiquement tous les passagers avant et arrière, tout en laissant pénétrer un peu de soleil dans des zones intermédiaires du véhicule.

On connait également du document DE 296 07 209 U une autre approche, selon laquelle deux stores à enrouleurs peuvent être déployés indépendemment depuis deux bords opposés de la vitre, et peuvent éventuellement être reliés l'un à l'autre.

Un autre inconvénient des techniques connues est l'encombrement du store, lorsqu'il est en position repliée. En effet, la surface à occulter est importante, ce qui suppose une grande longueur de toile, et donc une épaisseur importante, lorsque la toile est enroulée sur son tube d'enroulement. Or l'espace disponible à l'intérieur de l'habitacle est faible, et l'on cherche toujours à l'optimiser, pour des raisons de confort et d'ergonomie.

On comprend que, par exemple, logement important réservé à un store entre l'extrémité arrière du pavillon et le haut de la vitre arrière n'est pas acceptable, pour des raisons évidentes d'esthétique et d'espace disponible pour la tête des passagers.

Un autre inconvénient de la grande longueur de la toile est qu'elle conserve difficilement sa forme, lorsqu'elle est déployée. On est alors obligé d'utiliser des baleines, qui rendent l'ensemble plus cher et plus complexe, et qui augmente encore l'encombrement en position repliée.

L'invention a notamment pour objectif de pallier ces inconvénients de l'art antérieur.

Plus précisément, l'invention a pour objectif de proposer un dispositif d'occultation adapté notamment au pavillon d'un véhicule, qui soit plus modulaire, en termes de zones occultées/non occultées, que les stores connus.

En d'autres termes, l'invention a pour objectif de fournir un tel dispositif d'occultation qui permette de protéger chacun des occupants tant à l'avant qu'à l'arrière du véhicule, tout en laissant pénétrer, si nécessaire, une partie de la lumière.

Un autre objectif de l'invention est de fournir un tel dispositif d'occultation, qui permette de s'affranchir, le cas échéant, de la présence de baleines.

L'invention a également pour objectif de fournir un tel dispositif d'occultation qui soit simple de conception, peu coûteux et facile à mettre en oeuvre.

Encore un autre objectif de l'invention est de fournir un tel dispositif d'occultation, qui soit simple à actionner, que ce soit manuellement ou de façon motorisée.

Ces objectifs, ainsi que d'autres qui apparaîtront par la suite, sont atteints selon l'invention à l'aide d'un dispositif d'occultation d'une surface vitrée d'un véhicule automobile, comprenant deux toiles d'occultation montées chacune de part et d'autre de ladite surface vitrée et se déployant l'une vers l'autre, de façon à occulter complètement ladite surface vitrée, dans une position intégralement déployée, et à permettre au moins une position intermédiaire d'occultation, dans laquelle une portion sensiblement centrale de ladite surface vitrée n'est pas occultée, les toiles d'occultation étant déployées ou repliées simultanément et dans des directions opposées, sous l'effet d'une action d'entraînement unique.

Ainsi, l'encombrement des toiles repliées est réparti de part et d'autre de la surface vitrée, et la longueur de déploiement de chacune des toiles est réduite (divisée par deux, par rapport à une toile unique). Cela permet un gain en tenue de la toile, et en temps de repliement et de déploiement.

On obtient ainsi un mécanisme simple et efficace, garantissant une bonne protection des passagers avant et des passagers arrière, en une seule manoeuvre. Il reste en outre possible de conserver une zone de passage de la lumière, au centre du pavillon.

Les toiles peuvent être montées de diverses façons. Selon un mode de réalisation préférentiel, elles sont montées chacune sur un tube enrouleur.

De façon avantageuse, chacune desdites toiles présente, à son extrémité libre, une barre de tirage, et lesdites barres de tirage sont solidaires, par l'intermédiaire d'éléments de liaison permettant de lier leurs déplacements respectifs.

Lesdits éléments de liaison peuvent notamment comprendre au moins un câble et/ou au moins une courroie crantée.

Selon un mode de réalisation avantageux, lesdits éléments de liaison comprennent deux câbles et/ou deux courroies crantées, dont les déplacements sont liés par au moins un organe de régulation.

Ledit organe de régulation peut alors avantageusement comprendre au moins un pignon de liaison.

Ce pignon permet de bien équilibrer et répartir les forces appliquées aux barres de tirage.

De façon préférentielle, une première extrémité de chacun desdits câbles ou courroies est solidaire d'une première extrémité d'une desdites barres de tirage et une seconde extrémité de chacun desdits câbles ou courroies est solidaire d'une seconde extrémité de l'autre desdites barres de tirage.

Selon une première approche avantageuse de l'invention, ladite action d'entraînement unique peut être appliquée manuellement sur l'une des barres de tirage.

Selon une seconde approche avantageuse de l'invention (qui peut bien sûr être cumulée avec la première), ladite action d'entraînement unique peut être appliquée de façon motorisée.

Dans ce cas, avantageusement, le dispositif comprend des moyens uniques de motorisation, agissant sur ledit organe de régulation.

Selon un mode de réalisation préférentiel, ladite surface vitrée est un pavillon en matière transparente.

L'invention concerne également les véhicules automobiles équipés d'un ou plusieurs dispositifs d'occultation tels que décrits ci-dessus.

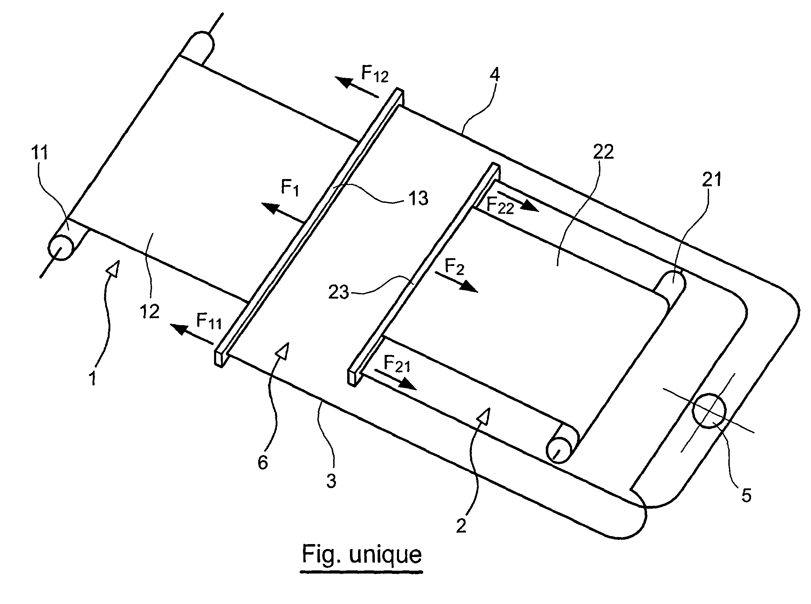

D'autres caractéristiques et avantages de l'invention apparaîtront plus clairement à la lecture de la description suivante d'un mode de réalisation préférentiel de l'invention, donnée à titre de simple exemple illustratif et non limitatif, et de la figure unique annexée, illustrant un dispositif d'occultation de pavillon à deux toiles, selon l'invention.

Ce mode de réalisation concerne l'occultation d'un pavillon vitré. Le dispositif d'occultation présente donc, sur la figure unique, deux stores 1 et 2, qui peuvent être des stores à enrouleur classiques, lorsqu'ils sont pris indépendamment.

Un premier store 1, dit store avant, peut être déployé depuis l'avant du véhicule. Le tube d'enroulement, et le cas échéant le boîtier de store, sont montés par exemple sur un élément de structure, ou dans la garniture intérieure du véhicule, au niveau de la jointure entre le pare-brise et le pavillon. Le second store 2, dit store arrière, peut quant à lui être déployé dans la direction opposée, depuis l'arrière du véhicule. Le tube d'enroulement, et le cas échéant le boîtier de store, sont montés par exemple sur un élément de structure, ou dans la garniture intérieure du véhicule, au niveau de la jointure entre la vitre arrière et le pavillon.

De façon classique, chaque store 1 et 2 comprend un tube d'enroulement 11, 21, une toile d'occultation 12, 22 montée sur ce tube d'enroulement, et une barre de tirage 13, 23, reliée à l'extrémité libre de la toile d'occultation. Ces deux barres de tirage peuvent être guidés, à chacune de leurs extrémités, dans des rails de guidage et de maintien.

Selon l'invention, les deux toiles 12 et 22 se déploient dans des directions opposées, l'une vers l'autre, de façon à coopérer pour couvrir intégralement (ou quasi-intégralement, si de légers décalages sont tolérés, par exemple sur les bords latéraux). Ainsi, lorsque les deux toiles 12 et 22 sont déployées, elles viennent en contact l'une avec l'autre (au moins par l'intermédiaire de leur barre de tirage respective) et/ou se chevauchent légèrement, pour éviter tout rai de lumière.

On obtient ainsi une occultation complète, sur toute la longueur du pavillon, alors que la distance de déploiement de chaque toile est réduite de moitié, par rapport à cette longueur de pavillon. L'occultation est donc obtenue deux fois plus rapidement qu'avec une toile unique s'étendant sur toute la longueur.

En outre, comme la longueur de toile déployée est divisée par deux, il peut être possible de s'affranchir de la présence de baleines. En d'autres termes, les barres de tirage 13, 23 jouent le rôle d'une baleine centrale.

Par ailleurs, cette réduction de longueur permet de réduire l'épaisseur de la toile enroulée, et donc d'optimiser l'espace utile à l'intérieur du véhicule. L'approche de l'invention permet de répartir l'encombrement entre deux emplacements, sur chacun des tubes d'enroulement 11 et 21, ce qui est beaucoup plus efficace et facile à gérer dans un véhicule.

L'invention permet en outre d'adapter aisément la position des deux stores, en particulier dans des positions intermédiaires. Ainsi, il est possible de protéger efficacement les passagers à l'avant et à l'arrière du véhicule, tout en conservant une portion éclairée et/ou réchauffée par le soleil, au centre. Cela n'est pas le cas dans les systèmes à toile unique, celle-ci devant être intégralement déployée pour protéger tous les occupants du véhicule.

Selon un aspect intéressant de l'invention, les déplacements des deux stores 1 et 2 sont liés. Pour cela, les barres de tirage 13 et 23 sont solidarisés, par exemple par un ou deux câbles, courroies crantées, chaînes, vis sans fin souples,... de façon qu'une force appliquée sur l'une des barres de tirage soient transmises de façon symétrique à l'autre barre de tirage.

Dans le mode de réalisation de la figure unique, on a prévu deux câbles ou courroies crantées 3 et 4, solidarisés l'un à l'autre part un pignon de liaison 5. Le câble 3 est relié d'une part à l'extrémité gauche de la barre de tirage 13 du store 1, et d'autre part à l'extrémité droite de la barre de tirage 23 du store 2. De même, symétriquement, le câble 4 est relié d'une part à l'extrémité droite de la barre de tirage 13 du store 1, et d'autre part à l'extrémité gauche de la barre de tirage 23 du store 2. On obtient ainsi un système d'actionnement simple et équilibré.

Dans un mode manuel, il suffit d'agir sur l'une des barres de tirage, pour qu'un mouvement symétrique soit appliqué à l'autre barre de tirage.

Par exemple, une force F₁ appliquée à la barre de tirage 13 pour replier la toile 12 entraîne la transmission des forces F₁₁ et F₁₂ sur les câbles 3 et 4 respectivement, par l'intermédiaire de la barre de tirage 13. Le pignon 5 assure que ses forces F₁₁ et F₁₂ sont égales.

Les autres extrémités des câbles 3 et 4 appliquent donc des forces respectives F₂₁ et F₂₂ sur la barre de tirage 23. Ces forces sont également équilibrées, toujours par l'intermédiaire du pignon 5.

La toile 22 s'enroule donc simultanément à l'enroulement de la toile 12. Il en est bien sûr de même pour le déroulement. La zone ouverte centrale 6 peut donc être aisément adaptée. On notera que cette zone 6 peut ne pas être tout à fait centrale, par exemple si le diamètre des tubes d'enroulement sont légèrement différents, ou si l'un des tubes d'enroulement est légèrement décalé.

Il est aisé d'automatiser un tel dispositif, avec des moyens classiques agissant sur une des barres de tirage (ou les deux) ou sur un des tubes d'enroulement (ou les deux).

Selon une approche avantageuse de l'invention, des moyens de motorisation agissent directement sur le pignon de liaison 5. Cette approche est très simple et très efficace.

Bien que l'on a présenté ci-dessus un store pour pavillon, on comprend que la même approche peut être adaptée pour d'autres baies du véhicule, et par exemple pour la vitre arrière. Dans ce cas, selon les besoins, l'axe de déploiement de la toile peut être en X ou en Y (parallèle ou transversal par rapport à l'axe principal du véhicule) selon les besoins.

Par ailleurs, dans certains cas, on peut prévoir qu'un dispositif selon l'invention ne couvre qu'une portion d'une baie vitrée, et par exemple que, pour un pavillon, deux dispositifs cohabitent, l'un pour le côté gauche et l'autre pour le côté droit du véhicule.

Enfin, bien que cela ne soit pas le cas dans le mode de réalisation décrit plus haut, on peut également prévoir que la liaison entre les deux stores puisse être désolidarisée, pour permettre, dans certaines situations, de ne déployer que l'un deux stores.

## Revendications

1. Dispositif d'occultation d'une surface vitrée d'un véhicule automobile, comprenant deux toiles d'occultation (12,22) montées chacune de part et d'autre de ladite surface vitrée et se déployant l'une vers l'autre, de façon à occulter complètement ladite surface vitrée, dans une position intégralement déployée, et à permettre au moins une position intermédiaire d'occultation, dans laquelle une portion sensiblement centrale de ladite surface vitrée n'est pas occultée,
**caractérisé en ce que** lesdites toiles d'occultation (12,22) sont déployées ou repliées simultanément et dans des directions opposées, sous l'effet d'une action d'entraînement unique.

2. Dispositif d'occultation selon la revendication 1, **caractérisé en ce que** lesdites toiles d'occultation (12,22) sont montées chacune sur un tube enrouleur (11,21).

3. Dispositif d'occultation selon l'une quelconque des revendications 1 et 2, **caractérisé en ce que** chacune desdites toiles (12,22) présente, à son extrémité libre, une barre de tirage (13,23), et **en ce que** lesdites barres de tirage (13,23) sont solidaires, par l'intermédiaire d'éléments de liaison (3,4) permettant de lier leurs déplacements respectifs.

4. Dispositif d'occultation selon la revendication 3, **caractérisé en ce que** lesdits éléments de liaison comprennent au moins un câble (3,4) et/ou au moins une courroie crantée.

5. Dispositif d'occultation selon la revendication 4, **caractérisé en ce que** lesdits éléments de liaison comprennent deux câbles (3,4) et/ou deux courroies crantées, dont les déplacements sont liés par au moins un organe de régulation (5).

6. Dispositif d'occultation selon la revendication 5, **caractérisé en ce que** ledit organe de régulation comprend au moins un pignon de liaison (5).

7. Dispositif d'occultation selon l'une quelconque des revendications 5 et 6, **caractérisé en ce qu'**une première extrémité de chacun desdits câbles (3,4) ou courroies est solidaire d'une première extrémité d'une desdites barres de tirage (13,23) et une seconde extrémité de chacun desdits câbles (3,4) ou courroies est solidaire d'une seconde extrémité de l'autre desdites barres de tirage (13,23).

8. Dispositif d'occultation selon l'une quelconque des revendications 3 à 7, **caractérisé en ce que** ladite action d'entraînement unique peut être appliquée manuellement sur l'une des barres de tirage (13,23).

9. Dispositif d'occultation selon l'une quelconque des revendications 3 à 8, **caractérisé en ce que** ladite action d'entraînement unique peut être appliquée de façon motorisée.

10. Dispositif d'occultation selon la revendication 9 et l'une quelconque des revendications 5 à 7, **caractérisé en ce qu'**il comprend des moyens uniques de motorisation agissant sur ledit organe de régulation (5).

11. Dispositif d'occultation selon l'une quelconque des revendications 1 à 10, **caractérisé en ce que** ladite surface vitrée est un pavillon en matière transparente.

12. Véhicule automobile comprenant des moyens d'occultation d'une surface vitrée présentant deux toiles d'occultation (12,22) montées chacune de part et d'autre de ladite surface vitrée et se déployant l'une vers l'autre, de façon à occulter complètement ladite surface vitrée, dans une position intégralement déployée, et à permettre au moins une position intermédiaire d'occultation, dans laquelle une portion sensiblement centrale de ladite surface vitrée n'est pas occultée, **caractérisé en ce que** lesdites toiles d'occultation (12,22) sont déployées ou repliées simultanément et dans des directions opposées, sous l'effet d'une action d'entraînement unique.

## Claims

1. Device for screening a glazed surface of a motor vehicle, comprising two screening webs (12, 22) which are mounted at one side and the other of the glazed surface and which move towards each other so as to completely screen the glazed surface, in an integrally deployed position, and to allow at least one intermediate screening position, in which a substantially central portion of the glazed surface is not screened,
**characterised in that** the screening webs (12, 22) are deployed or folded simultaneously and in opposing directions, under the effect of a single movement action.

2. Screening device according to claim 1, **characterised in that** the screening webs (12, 22) are each mounted on a tubular winder (11, 21).

3. Screening device according to either claim 1 or claim 2, **characterised in that** each of the webs (12, 22) has, at the free end thereof, a pulling bar (13, 23) and **in that** the pulling bars (13, 23) are fixedly joined by means of connection elements (3, 4) which allow their respective movements to be linked.

4. Screening device according to claim 3, **characterised in that** the connection elements comprise at least one cable (3, 4) and/or at least one notched belt.

5. Screening device according to claim 4, **characterised in that** the connection elements comprise two cables (3, 4) and/or two notched belts whose movements are linked by means of at least one control member (5).

6. Screening device according to claim 5, **characterised in that** the control member comprises at least one connection pinion (5).

7. Screening device according to either claim 5 or claim 6, **characterised in that** a first end of each of the cables (3, 4) or belts is fixedly joined to a first end of one of the pulling bars (13, 23) and a second end of each of the cables (3, 4) or belts is fixedly joined to a second end of the other of the pulling bars (13, 23).

8. Screening device according to any one of claims 3 to 7, **characterised in that** the single movement action can be applied manually to one of the pulling bars (13, 23).

9. Screening device according to any one of claims 3 to 8, **characterised in that** the single movement action can be applied in a motorised manner.

10. Screening device according to claim 9 and any one of claims 5 to 7, **characterised in that** it comprises single motorisation means which act on the control member (5).

11. Screening device according to any one of claims 1 to 10, **characterised in that** the glazed surface is a roof of transparent material.

12. Motor vehicle comprising means for screening a glazed surface which has two screening webs (12, 22) which are mounted at one side and the other of the glazed surface and which are deployed towards each other, so as to completely screen the glazed surface, in an integrally deployed position, and to allow at least one intermediate screening position, in which a substantially central portion of the glazed surface is not screened, **characterised in that** the screening webs (12, 22) are deployed or folded simultaneously and in opposing directions, under the effect of a single movement action.

## Patentansprüche

1. Verdunkelungsvorrichtung einer verglasten Fläche eines Kraftfahrzeugs, die zwei Verdunkelungsstoffe (12, 22) aufweist, die jeder auf einer Seite der verglasten Fläche montiert sind und sich zueinander auffalten, so dass die verglaste Fläche in einer ganz aufgefalteten Position komplett verdunkelt wird, und dass mindestens eine Verdunkelungszwischenposition erlaubt wird, in der ein im Wesentlichen zentraler Abschnitt der verglasten Fläche nicht verdunkelt ist,
**dadurch gekennzeichnet, dass** die Verdunkelungsstoffe (12, 22) gleichzeitig und in entgegengesetzte Richtungen unter der Einwirkung einer einzigen Antriebsaktion auf- oder zugefaltet werden.

2. Verdunkelungsvorrichtung nach Anspruch 1, **dadurch gekennzeichnet, dass** die Verdunkelungsstoffe (12, 22) jeder auf ein Aufrollrohr (11, 21) montiert sind.

3. Verdunkelungsvorrichtung nach einem der Ansprüche 1 und 2, **dadurch gekennzeichnet, dass** jeder der Stoffe (12, 22) an seinem freien Ende eine Zugstange (13, 23) aufweist, und dass die Zugstangen (13, 23) über Verbindungselemente (3, 4), die das Verbinden ihrer jeweiligen Bewegungen erlauben, fest miteinander verbunden sind.

4. Verdunkelungsvorrichtung nach Anspruch 3, **dadurch gekennzeichnet, dass** die Verbindungselemente mindestens ein Kabel (3, 4) und oder mindestens einen Zahnriemen aufweisen.

5. Verdunkelungsvorrichtung nach Anspruch 4, **dadurch gekennzeichnet, dass** die Verbindungselemente zwei Kabel (3, 4) und/oder zwei Zahnriemen aufweisen, deren Bewegungen durch mindestens ein Regelelement (5) verbunden sind.

6. Verdunkelungsvorrichtung nach Anspruch 5, **dadurch gekennzeichnet, dass** das Regelelement mindestens ein Verbindungsritzel (5) aufweist.

7. Verdunkelungsvorrichtung nach einem der Ansprüche 5 und 6, **dadurch gekennzeichnet, dass** ein erstes Ende jedes der Kabel (3, 4) oder Riemen fest mit einem ersten Ende einer der Zugstangen (13, 23) verbunden ist, und ein zweites Ende jedes der Kabel (3, 4) oder der Riemen fest mit einem zweiten Ende der anderen der Zugstangen (13, 23) verbunden ist.

8. Verdunkelungsvorrichtung nach einem der Ansprüche 3 bis 7, **dadurch gekennzeichnet, dass** die einzige Antriebsaktion manuell auf eine der Zugstangen (13, 23) angelegt werden kann.

9. Verdunkelungsvorrichtung nach einem der Ansprüche 3 bis 8, **dadurch gekennzeichnet, dass** die einzige Antriebsaktion motorisiert angelegt werden kann.

10. Verdunkelungsvorrichtung nach Anspruch 9 und einem der Ansprüche 5 bis 7, **dadurch gekennzeichnet, dass** sie einzige Antriebsmittel aufweist, die auf das Regelelement (5) einwirken.

11. Verdunkelungsvorrichtung nach einem der Ansprüche 1 bis 10, **dadurch gekennzeichnet, dass** die verglaste Fläche ein Fahrzeughimmel aus durchsichtigem Material ist.

12. Kraftfahrzeug, das Verdunkelungsmittel einer verglasten Fläche aufweist, die zwei Verdunkelungsstoffe (12, 22) aufweisen, die jeder auf einer Seite der verglasten Fläche montiert sind und sich zueinander auffalten, so dass die verglaste Fläche in einer komplett aufgefalteten Position komplett verdunkelt wird, und dass mindestens eine Verdunkelungszwischenposition erlaubt wird, in der ein im Wesentlichen zentraler Abschnitt der verglasten Fläche nicht verdunkelt ist, **dadurch gekennzeichnet, dass** die Verdunkelungsstoffe (12, 22) gleichzeitig und in entgegengesetzte Richtungen unter der Wirkung einer einzigen Antriebsaktion auf- oder zugefaltet werden.
